Europäisches Patentamt

European Patent Office

Office européen des brevets

(19)

(11) Veröffentlichungsnummer: **0 591 867 A1**

## (12) EUROPÄISCHE PATENTANMELDUNG

(21) Anmeldenummer: **93115909.9**

(51) Int. Cl.5: **G02B 6/44**

(22) Anmeldetag: **01.10.93**

(30) Priorität: **07.10.92 DE 4233815**

(43) Veröffentlichungstag der Anmeldung:
**13.04.94 Patentblatt 94/15**

(84) Benannte Vertragsstaaten:
**AT BE CH DE FR GB IT LI NL SE**

(71) Anmelder: **SIEMENS AKTIENGESELLSCHAFT**
**Wittelsbacherplatz 2**
**D-80333 München(DE)**

(72) Erfinder: **Oestreich, Ulrich**
**Karl-Witthalmstrasse 15**
**D-81375 München(DE)**

(54) **Verfahren zum Einbringen eines Lichtwellenleiters in eine rohrförmige Umhüllung und Einrichtung zur Durchführung des Verfahrens.**

(57) Der Lichtwellenleiter (LW) wird zusammen mit der einzubringenden Füllmasse (FM) in Längsrichtung über eine gewisse Länge (L) geführt. Die Geschwindigkeit des Lichtwellenleiters (v1*) wird anschließend durch eine Verringerung in der Geschwindigkeit der Füllmasse auf einen niedrigeren Wert (v2) abgebremst, wobei der Lichtwellenleiter (LW) seine durch die vorherige höhere Geschwindigkeit (v1*) bedingte Überlänge in einen ungeradlinigen Verlauf umsetzt.

FIG 1

EP 0 591 867 A1

Die Erfindung betrifft ein Verfahren zum Einbringen mindestens eines Lichtwellenleiters in eine rohrförmige Umhüllung, wobei der Lichtwellenleiter durch eine in die rohrförmige Umhüllung eingebrachte Füllmasse in Längsrichtung bewegt wird.

Ein Verfahren dieser Art ist aus der DE 3027743 A1 bekannt, wobei der Lichtwellenleiter in die Füllmasse derart eingeschoben wird, daß er dort einen wellenförmigen, eine Überlänge ergebenden Verlauf aufweist. Dabei wird die Füllmasse entweder gleichzeitig mit dem Lichtwellenleiter über ein einziges Füllrohr zugeführt oder es werden für die Zuführung des Lichtwellenleiters einerseits und für die Zuführung der Füllmasse andererseits getrennte Füllrohre verwendet. In denjenigen Fällen, in denen beim bekannten Stand der Technik die Lichtwellenleiter nicht gemeinsam mit der Füllmasse in ein Führungsrohr eingeführt werden, ist für die Längsbewegung der Lichtwellenleiter eine eigene Zwangstransportvorrichtung vorgesehen, welche dem Lichtwellenleiter die nötige Vorschub-Geschwindigkeit erteilt, welche zur Erzielung des wellenförmigen Verlaufes erforderlich ist.

Der Erfindung liegt die Aufgabe zugrunde, ein Verfahren anzugeben, bei dem in besonders einfacher und wirkungsvoller Weise die notwendige Überlänge für den Lichtwellenleiter erreicht werden kann. Diese Aufgabe wird bei einem Verfahren der eingangs genannten Art dadurch gelöst, daß der zunächst drucklos geführte Lichtwellenleiter über eine gewisse Länge zusammen mit der eine bestimmte Geschwindigkeit aufweisenden Füllmasse geführt und von dieser dabei mitgenommen wird und das anschließend die in Längsrichtung verlaufende Geschwindigkeit der Füllmasse auf einen zweiten Geschwindigkeitswert derart verringert wird, daß der Lichtwellenleiter dadurch abgebremst und seine durch die vorherige höhere erste Geschwindigkeit bedingte Überlänge in einen ungeradlinigen Verlauf umgesetzt wird.

Durch die Erfindung ist es möglich, den Lichtwellenleiter zunächst in einfacher und schonender Weise, nämlich drucklos und ohne Kontakt mit der Füllmasse zu führen. Dies bietet die Möglichkeit, z. B. einen Führungskanal oder ein Führungsrohr für den Lichtwellenleiter so auszulegen, wie es für eine optimale Führung des Lichtwellenleiters am besten geeignet ist, ohne daß dabei auf einen Füllmassentransport und die damit verbundenen Probleme (Klebrigkeit, Druck, Verstopfungsgefahr o. d. gl.) geachtet werden muß. Eine zusätzliche (äußere) Zwangstransportvorrichtung ist bei der Erfindung nicht erforderlich, weil anschließend nach der drucklosen Führung des Lichtwellenleiters durch die Füllmasse eine Mitnahme bzw. die Aufprägung einer entsprechenden Abzugsgeschwindigkeit erfolgt. Die einfache nachfolgende Abbremsung des Lichtwellenleiters infolge der anschließend verringerten Geschwindigkeit der Füllmasse bewirkt direkt die Überlänge, weil die vorhergehende höhere Geschwindigkeit des Lichtwellenleiters sich nur auf diese Weise, d. h. in einem wellenförmigen Verlauf innerhalb der rohrförmigen Umhüllung ausgleichen kann. Die Größe der jeweils eingestellten Überlänge hängt in einfacher Weise von der (höheren) Geschwindigkeit ab, die dem Lichtwellenleiter aufgeprägt wird, verglichen mit der (geringeren) Geschwindigkeit auf die anschließend die Füllmasse zusammen mit dem Lichtwellenleiter gebracht wird.

Die Erfindung betrifft weiterhin eine Einrichtung zur Durchführung des erfindungsgemäßen Verfahrens, welche dadurch gekennzeichnet ist, daß für die durcklose Führung des Lichtwellenleiters ein Führungsrohr vorgesehen ist, daß vor einer weiteren rohrförmigen Führung endet, welche der Zuführung der Füllmasse dient, und daß beide Führungseinrichtungen zumindest teilweise in die rohrförmige Umhüllung für den Lichtwellenleiter hineinragen.

Weiterbildungen an der Erfindung sind in Unteransprüchen wiedergegeben.

Die Erfindung und ihre Weiterbildungen werden nachfolgend an Hand von Zeichnungen näher erläutert. Es zeigen:

Fig. 1 in schematischer Darstellung den Aufbau einer nach dem erfindungsgemäßen Verfahren arbeitenden Einrichtung,

Fig. 2 einen vergrößerten Ausschnitt im Bereich der Eintrittsstelle des Lichtwellenleiters in die Füllmasse und

Fig. 3 eine Abwandlung der Führung für die Lichtwellenleiter und die Füllmasse.

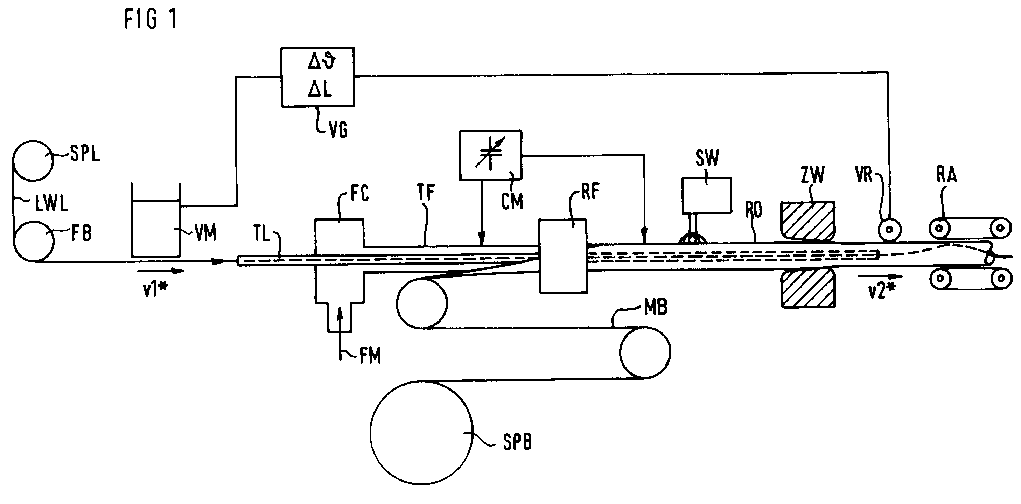

In Figur 1 ist eine Spule SPL vorgesehen, von der ein Lichtwellenleiter LW abgezogen wird. Dieser wird über zweckmäßig in ihrer Geschwindigkeit geregelte Faserbremse FB geführt, die im einfachsten Fall aus einer abgebremsten Scheibe besteht, um welche der Lichtwellenleiter LW einmal herumgeschlungen wird. Der Lichtwellenleiter LW läuft anschliessend in Führungsrohr TL ein, in dem er drucklos und praktisch ohne Kontakt mit einer etwaigen Füllmasse weiter nach rechts befördert wird. Dieses Führungsrohr TL wird so ausgelegt, daß der Lichtwellenleiter möglichst reibungsarm vorwärts bewegt werden kann, z.B. durch Einbringen von Gleitwachs.

Es ist auch möglich, gleichzeitig mehrere Lichtwellenleiter einzuführen, wobei entsprechend eine größere Anzahl von Vorratsspulen analog SPL und Faserbremsen analog FB vorzusehen wären. Ein etwaiges auf diese Weise erhaltenes Lichtwellenleiter-Bündel würde analog dem Lichtwellenleiter LW in ein entsprechendes Führungsrohr anlog TL eingeführt werden.

Für die Zuführung einer den Lichtwellenleiter einbettenden Füllmasse ist eine Füllkammer FC vorgesehen, der die durch einen Pfeil angedeutete Füllmasse FM unter Druck zugeführt wird. Die Füllmasse FM wird innerhalb einer rohrförmigen Führungseinrichtung TF nach rechts bewegt, welche das Führungsrohr TL für den Lichtwellenleiter LW konzentrisch umschließt.

Zur Bildung einer rohrförmigen, aus einem Metallband geformten Umhüllung ist eine Vorratsspule SPB vorgesehen, von der ein bevorzugt aus Stahl oder Kupfer bestehendes Metallband MB abgezogen und einer Rohrformungseinrichtung RF zugeführt wird. In dieser Rohrformungseinrichtung RF wird das Band MB zu einem geschlossenen Rohr RO geformt, wobei die Stoßstelle mittels eines Schweißgerätes SW verschlossen wird. Da die Füllmasse FM im Bereich der Schweißeinrichtung SW innerhalb des Führungsrohres TF verläuft, tritt hier kein Kontakt zur Füllmasse FM auf und es besteht somit keine Gefahr, daß z. B. diese Füllmasse durch die hohen Temperaturen beim Schweißen chemisch zersetzt oder in sonstiger Weise geschädigt oder beeinträchtigt wird. Das so erhaltene allseits geschlossene Rohr wird einer Ziehvorrichtung ZW zugeführt, durch die es auf einen bestimmten Außendurchmesser herunterkalibriert wird. Das Führungsrohr TF reicht auch noch bis durch die Kalibriervorrichtung ZW hindurch bzw. über diese hinaus, so daß auch hier die Füllmasse FM durch die hohen Temperaturen beim Ziehvorgang nicht beeinträchtigt wird. Die Rohre TF und TL könnten für normale Zwecke viel kürzer sein. Da aber das Metallrohr RO erst geschweißt und kalibriert sein muß, bevor die Füllmasse kontaktiert wird, ergibt sich die dargestellte längere Anordnung.

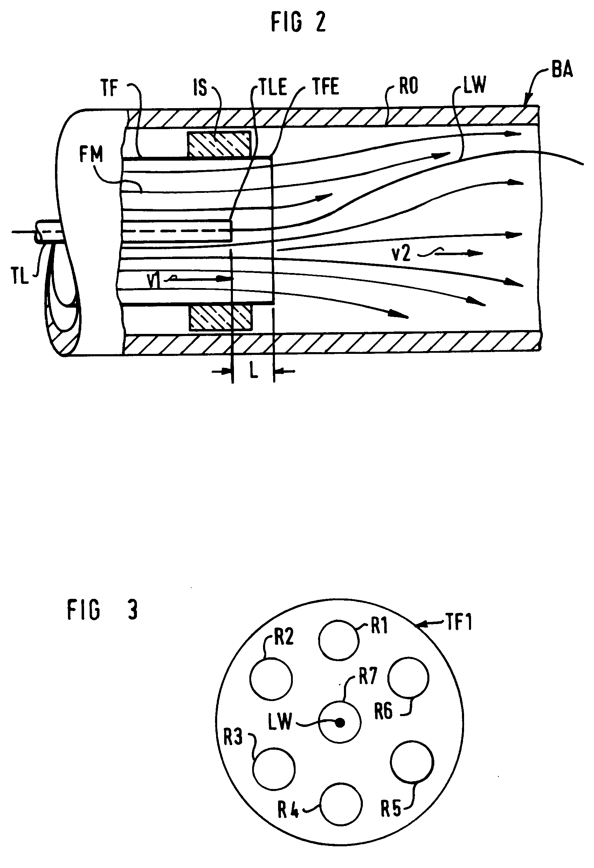

Das Führungsrohr TF für die Füllmasse FM ist mit seinem Ende-TFE (vergl. Fig. 2) in einem größeren Abstand zum Kalibrierwerkzeug ZW angeordnet, vorzugsweise etwa einige cm. Durch die vorstehend beschriebene Anordnung wird auch dann die Füllmasse FM vor höheren Temperaturen geschützt, wenn das Rohr RO z. B. aus Kunstoff besteht und durch Extrusion hergestellt wird.

Die Einzelheiten des Strömungsverlaufes im Bereich des Endes des Führungsrohres TF für die Füllmasse sind aus der vergrößerten Darstellung nach Figur 2 ersichtlich. Das Führungsrohr TL für den Lichtwellenleiter LW endet um eine Länge L vor dem Ende TFE des Führungsrohres TF für die Füllmasse FM. Innerhalb des Führungsrohres TL ist der Lichtwellenleiter LW drucklos geführt, d. h. im Inneren dieses Rohres ist (abgesehen vielleicht von einem geringen, am Ende des Rohres TL eintretenden Füllmassenanteil) keine Füllmasse FM enthalten. Der Lichtwellenleiter LW wird nach dem Verlassen seines ihn allseits umschließenden Führungsrohres TL von der Füllmasse FM erfaßt, die sich hier mit einer Geschwindigkeit v1 von links nach rechts in Durchlaufrichtung vorwärts bewegt. Je nach der Zähigkeit der Füllmasse, nach der Rauhigkeit der Oberfläche des Lichtwellenleiters und nach der Länge L, in der die Füllmasse FM mit der Geschwindigkeit v1 mit dem Lichtwellenleiter LW in Berührung kommt, wird der Lichtwellenleiter LW mitgenommen und auf eine Geschwindigkeit v1* gebracht, für welche die Beziehung gilt

$$v1 \geqq v1^*$$

Nach der Länge L, in welcher der Lichtwellenleiter LW zusammen mit der Füllmasse FM bewegt wird, endet das Führungsrohr TF für die Füllmasse und ab dem Ende TFE dieses Rohres steht für die Füllmasse FM der größere Querschnitt des Metallrohres RO zur Verfügung. Dies hat zur Folge, daß sich die Geschwindigkeit, mit der die Füllmasse innerhalb des Rohres RO bewegt wird, stark verringert und zwar auf den Wert v2. Unter der Voraussetzung, daß die Geschwindigkeit v1* des Lichtwellenleiters LW einen Wert erreicht hatte, für den gilt

$$v1^* > v2$$

kann sich die durch die ursprünglich höhere Geschwindigkeit v1* des Lichtwellenleiters LW ergebende Überlänge praktisch nur dadurch ausgleichen, daß der Lichtwellenleiter LW etwa ab der Austrittsstelle aus dem Führungsrohr TF entsprechend bogen- oder wendelförmig verläuft, so daß die Überlänge des Lichtwellenleiters in der so erhaltenen Bündel- bzw. Hohlader BA erhalten bleibt.

Die Überlänge wird um so großer, je größer der Unterschied zwischen den Geschwindigkeitswerten v1* und v2 ist. Dieser Geschwindigkeitsunterschied kann in einfacher Weise eingestellt werden, z. B. durch Veränderung der Länge L (größere Länge L ergibt größere Geschwindigkeit v1*), durch Änderung der Viskosität der Füllmasse FM (größere Viskosität ergibt größere Geschwindigkeit v1*) , durch entsprechende Dimensionierung der Faserbremse FB sowie durch eine entsprechende Auswahl der Werte des Innendurchmessers des Führungsrohres TF und des Innendurchmessers des Schutzrohres RO. Je größer der Durchmessersprung zwischen diesen beiden Durchmesserwerten ist, desto kleiner wird bei gegebener Geschwindigkeit v1 die Geschwindigkeit v2 und desto größer entsprechend die Überlänge des Lichtwellenleiters LW in der fertigen Lichtwellenleiterader BA.

Da das Führungsrohr TF relativ lang wird (in der Größenordnung etwa von mindestens 1 Meter) kann es zweckmäßig sein, zum Erhalt einer möglichst stabilen und auch für hohen Druck geeigneten Form eine Struktur zu wählen, wie sie in Figur 3 dargestellt ist. Dort sind in einem stabilen Führungsrohr TF1 mehrere mit ihrem Mittelpunkt auf einer Kreislinie angeordnete Bohrungen R1 bis R6 angeordnet, wobei durch diese Bohrungen R1 bis R6 die Füllmasse FM hindurchgepreßt wird. In der Mitte ist eine koaxial hierzu verlaufende weitere Bohrung R7 vorgesehen, in welcher der Lichtwellenleiter LW angeordnet ist. Anstelle der Anbringung von Bohrungen in einem festen Körper lassen sich auch analog der Struktur nach Figur 3 z. B. ein zentrales Rohr (entsprechend R7) und darum herum eine Reihe von weiteren Rohren (entsprechen R1 bis R6) anordnen und zu einem Führungskörper z. B. durch Verschweißen zusammenfassen.

Das Rohr RO wird nach der Beendigung des Fertigungs- und Füllprozesses außen gefaßt und entsprechend weiter transportiert (z. B. zu einer Ablage auf einem Teller oder zur Aufwicklung auf einer Trommel), wozu beispielsweise eine Abzugsraupe RA verwendet werden kann.

Für die Bestimmung des Wertes der Überlänge des Lichtwellenleiters LW in der fertigen Lichtwellenleiterader BA sind möglichst genaue Geschwindigkeitsmessungen zweckmäßig. Hierzu wird zunächst die Geschwindigkeit v1*,mit der der Lichtwellenleiter in das Führungsrohr TL eingezogen mittels einer Meßeinrichtung VM bestimmt. Die Messung der Länge des Lichtwellenleiters LW also indirekt die Messung der Geschwindigkeit v1* kann beispielsweise über elektrostatische Oberflächenfelder erfolgen, wobei mehrere Lichtwellenleiter zu einem präzisen Gleichlauf gezwungen werden müssen z. B. über ein Walzensystem oder eine geeignete Bandraupe.

Mittels einer Rolle VR wird außerdem die Geschwindigkeit v2* Rohres RO bestimmt, wobei diese Rolle VR schlupffrei auf der Außenoberfläche des Rohres RO läuft. Die so erhaltenen Meßwerte werden zweckmäßig in elektrische Impulse umgewandelt und einer Vergleichseinrichtung VG zugeführt, welche gleichzeitig von der Meßeinrichtung VM den Wert der Geschwindigkeit v1* erhält. Aus der Differenz dieser beiden Geschwindigkeitswerte ergibt sich die Überlänge ΔL, mit der der Lichtwellenleiter LW im Inneren des Rohres RO angeordnet ist.

Es ist auch möglich, die Geschwindigkeit, mit der das Metallband MB abgezogen wird, zu messen und das Maß der Kalibrierung durch die Kalibriereinrichtung ZW rechnerisch zu berücksichtigen und so zur Geschmeidigkeit v2* zu gelangen.

Weiterhin ist möglichst darauf zu achten, daß die Füllmasse FM tatsächlich den Innenraum des Rohres RO vollständig ausfüllt. Dies gilt nicht nur für die vorstehend beschriebene Rohrkonstruktion sondern ganz generell. Hierzu ist neben der Anwendung eines entsprechend hohen Druckes für die Zuführung der Füllmasse auch eine besondere Meßeinrichtung zweckmäßig, wobei bevorzugt auf eine Kapazitätsmessung zurückgegriffen werden kann. Hierzu wird die Fülleinrichtung für die Füllmasse FM also die Füllkammer FC samt den Zuführungsleitungen für die Füllmasse FM und das metallische Führungsrohr TF isoliert gegenüber dem metallischen Rohr RO geführt. Um dies sicherzustellen, ist das Führungsrohr TF über Isolierstützen IS ein- oder mehrfach im Inneren gegen das Rohr RO abgestützt, so daß mit einer entsprechenden Kapazitätsmeßeinrichtung CM die Kapazität zwischen dem metallischen Führungsrohr TF und dem Außenrohr RO der Lichtwellenleiterader BA bestimmt werden kann. Wenn z. B. im Bereich der Austrittsstelle der Füllmasse FM am Ende PFE des Führungsrohres TF ein größerer Lufteinschluß auftritt, dann wird die Kapazität die mit dem Meßgerät CM bestimmt wird geringer, weil die Elektrizitätskonstante der Füllmasse (meist ölhaltige Füllmassen) entsprechend höher ist als die von Luft. Beim Anfahrvorgang ist natürlich zunächst immer eine derartige Luftblase vorhanden und in dem Augenblick, in dem sie verschwunden ist, d. h. in dem der gemessene Kapazitätswert sein Maximum erreicht hat, ist derjenige Zustand erreicht, in dem eine vollständige und allseitige Füllung des Rohres RO gewährleistet ist.

Eine rohrförmige Umhüllung RO mit einem oder mehreren Lichtwellenleitern ist besonders geeignet als Zentralelement für Erdseil-Luftkabel, wo ein dichter Einschluß der Lichtwellenleiter einerseits und eine vollständige Füllung des Innenraums mit Füllmasse andererseits zwingend notwendig sind. Weiterhin ist das rohrförmige Übertragungselement z.B. auch als Zentralelement für Seekabel oder Luftkabel geeignet, wobei jeweils auf das Zentralelement eine oder mehrere Lagen von zugfesten Elementen aufzubringen sind und zusätzlich außen ein- oder mehrschichtiger Mantel, diese Weise zu einem optischen Kabel zu gelangen.

Zweckmäßige Werte für ein gemäß der Erfindung hergestelltes optisches Übertragungselement sind beispielsweise:
Überlänge der Lichtwellenleiter: 0,5 %
Innen/Außendurchmesser des Rohres RO 5,2/6,0 mm
Innen/Außendurchmesser des Führungsrohres TL 1,5/1,8 mm
Innen/Außendurchmesser des Führungsrohres TF 3,0/3,5 mm

## Patentansprüche

1. Verfahren zum Einbringen mindestens eines Lichtwellenleiters (LW) in eine rohrförmige Umhüllung (RO), wobei der Lichtwellenleiter (LW) durch eine in die rohrförmige Umhüllung (RO) mit Druck eingebrachte Füllmasse (FM) in Längsrichtung bewegt wird,

**dadurch gekennzeichnet,**
daß der zunächst drucklos geführte Lichtwellenleiter (LW) anschließend über eine gewisse Länge (L) zusammen mit der eine bestimmte (erste) Geschwindigkeit (v1) aufweisenden Füllmasse (FM) geführt und von dieser dabei mitgenommen wird, und daß anschließend die in Längsrichtung verlaufende Geschwindigkeit (v1) der Füllmasse (FM) auf einem zweiten Geschwindigkeitswert (v2) derart verringert wird,
daß der Lichtwellenleiter (LW) dadurch abgebremst und seine durch die vorherige höhere erste Geschwindigkeit (v1*) bedingte Überlänge in einen ungeradlinigen Verlauf umgesetzt wird.

2. Verfahren nach Anspruch 1,
**dadurch gekennzeichnet,**
daß die rohrförmige Umhüllung (RO) aus Metall hergestellt wird.

3. Verfahren nach Anspruch 2,
**dadurch gekennzeichnet,**
daß ein flaches Metallband (MB) zu einem Rohr geformt und die Stoßstelle durch Schweißen verschlossen wird.

4. Verfahren nach einem der Ansprüche 2 oder 3,
**dadurch gekennzeichnet,**
daß das Rohr (RO) einem Kalibriervorgang unterworfen wird.

5. Verfahren nach einem der vorhergehenden Ansprüche,
**dadurch gekennzeichnet,**
daß die Füllmasse (FM) und/oder der Lichtwellenleiter (LW) jeweils durch mindestens ein Führungsrohr (TL, TF) geführt wird.

6. Verfahren nach Anspruch 5,
**dadurch gekennzeichnet,**
daß der Lichtwellenleiter (LW) und/oder die Füllmasse (FM) solange innerhalb der zugehörigen Rohre (TL, TF) geführt werden, bis sie in Durchlaufrichtung gesehen eine etwaige Extrusions- oder Schweißeinrichtung (SW) und/oder eine Zieheinrichtung (ZW) passiert haben.

7. Verfahren nach einem der vorhergehenden Ansprüche,
**dadurch gekennzeichnet,**
daß die Geschwindigkeit (v1*), mit welcher der Lichtwellenleiter (LW) einläuft, gemessen wird,
daß die Geschwindigkeit (v2*), mit welcher die rohrförmige Umhüllung (RO) bewegt wird, gemessen wird,
und daß aus diesen beiden Geschwindigkeitswerten (v1*, v2*) die Überlänge des Lichtwellenleiters (LW) innerhalb der rohrförmigen Umhüllung (RO) bestimmt wird.

8. Verfahren insbesondere nach einem der Ansprüche 2 bis 7,
**dadurch gekennzeichnet,**
daß der Wert der elektrischen Kapazität zwischen der rohrförmigen Umhüllung (RO) einerseits und einem Führungsrohr (TF) für die Füllmasse (FM) gemessen wird,
und daß die Zufuhr der Füllmasse (FM) so eingestellt wird,
daß der gemessene Wert der elektrischen Kapazität ein Maximum erreicht.

9. Einrichtung zur Durchführung des Verfahrens nach einem der vorhergehenden Ansprüche,
**dadurch gekennzeichnet,**
daß für die durcklose Führung des Lichtwellenleiters (LW) ein Führungsrohr (TL) vorgesehen ist, das vor einer welteren rohrförmigen Führung (TF) endet, welche der Zuführung der Füllmasse (FL) dient, und daß beide Führungseinrichtungen (TL, TF) zumindest teilweise in die rohrförmige Umhüllung (RO) für den Lichtwellenleiter (LW) hineinragen.

10. Einrichtung nach Anspruch 9,
**dadurch gekennzeichnet,**
daß das der Führung des Lichtwellenleiters (LW) dienende Führungsrohr (TL) etwa zentrisch in der rohrförmigen Umhüllung (RO) angeordnet ist.

11. Einrichtung nach einem der Ansprüche 9 oder 10,
**dadurch gekennzeichnet,**
daß das Führungsrohr (TL) für den Lichtwellenleiter (LW) innerhalb, vorzugsweise zentrisch, der rohrförmigen Führung (TF) für die Füllmasse (FM) angeordnet ist.

12. Einrichtung nach einem der Ansprüche 9 bis 11,
**dadurch gekennzeichnet,**
daß das Führungsrohr (TL) für den Lichtwellenleiter (LW) sowie die Führung (TF) für die Füllmasse elektrisch isoliert gegenüber der rohrförmigen Umhüllung (RO) angeordnet sind,
und daß an die rohrförmige Umhüllung (RO) einerseits und die Führungseinrichtung (TL, TF) andererseits eine Kapazitätsmeßeinrichtung (CM) angeschlossen ist.

13. Einrichtung nach einem der Ansprüche 9 bis 12,
**dadurch gekennzeichnet,**

daß eine Meßeinrichtung (VM) die Bestimmung der Geschwindigkeit (v1*) des Lichtwellenleiters (LW) vorgesehen ist,

daß eine Meßeinrichtung (VR) für die Bestimmung der Geschwindigkeit (v2*) der rohrförmigen Umhüllung (RO) vorgesehen ist,

und daß beide Meßeinrichtungen mit einer Auswerteeinrichtung (VG) verbunden sind, welche der Bestimmung der Überlänge des Lichtwellenleiters (LW) innerhalb der rohrförmigen Umhüllung (RO) dient.

FIG 1

SPL

LWL

FB

SW

ZW

VR

RA

Δϑ
ΔL

VG

FC

TF

CM

RF

RO

VM

TL

v1*

FM

MB

SPB

v2*

EP 0 591 867 A1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X <br> A | EP-A-0 050 495 (BICC) <br> * Ansprüche; Abbildungen * <br> --- | 1-6 <br> 7,9,10 | G02B6/44 |
| X | CA-A-1 218 810 (CANADA WIRE CABLE) <br> * Ansprüche; Abbildungen * <br> --- | 1,5,7 | |
| X | GB-A-2 205 972 (BICC) <br> * Ansprüche; Abbildungen * <br> --- | 1 | |
| X | GB-A-2 203 856 (BICC) <br> * Ansprüche; Abbildungen * <br> --- | 1 | |
| Y | GB-A-2 204 711 (STC) <br> * Ansprüche; Abbildungen * <br> --- | 1-7 | |
| Y | EP-A-0 465 656 (NKK) <br> * Ansprüche; Abbildungen * <br> --- | 1-7 | |
| A | EP-A-0 286 819 (SIEMENS) <br> * Ansprüche; Abbildungen * <br> --- | 1,7 | **RECHERCHIERTE SACHGEBIETE (Int.Cl.5)** |
| A | DE-A-40 03 594 (SIEMENS) <br> * Ansprüche; Abbildungen * <br> --- | 1 | G02B |
| A,D | DE-A-30 27 743 (SIEMENS) <br> * Ansprüche; Abbildungen * <br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 7. Januar 1994 | Pfahler, R |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
    Dokument

EPO FORM 1503 03.82 (P04C03)